# FASCICULE DE BREVET EUROPEEN

(11) **EP 2 371 508 B1**
(45) Date de publication et mention de la délivrance du brevet: **08.01.2014**
(21) Numéro de dépôt: 10158990.1
(22) Date de dépôt: 01.04.2010
(51) Int. Cl.: B29B 17/02, B29C 51/14, B32B 27/08

(54) **Procédé de recyclage de déchets de feuilles en matériau polymère complexe, dispositif associé**
Recycling-Verfahren für Abfälle von Folien aus Polymerverbundstoffmaterial, und entsprechende Vorrichtung
Method for recycling waste of sheets made of complex polymer material, associated device

(43) Date de publication de la demande: 05.10.2011
(73) Titulaire: Offset Polyplast, Casablanca (MA)
(72) Inventeur: Cornigeanu, Cristian, Casablanca (MA); Marrakchi, Mamoun, CASABLANCA (MA)
(74) Mandataire: Fantin, Laurent

(56) Documents cités:
- EP-A1- 0 264 708
- DE-A1- 2 936 856
- DE-A1- 19 509 808
- DE-C1- 4 017 923
- JP-A- 2 299 816
- US-B1- 7 438 244
- BLEDZKI A K ET AL: "DEVICES FOR FILTRATION OF MOLTEN PLASTICS", INTERNATIONAL POLYMER SCIENCE AND TECHNOLOGY, RAPRA TECHNOLOGY, SHREWABURY, GB, vol. 23, no. 10, 1 January 1996 (1996-01-01), pages T/103-T/108, XP000689656, ISSN: 0307-174X

## Description

La présente invention concerne un procédé de recyclage de déchets de feuilles en matériau polymère complexe selon la revendication 1.

L'invention couvre aussi le dispositif associé selon la revendication 9.

On connaît des procédés de conditionnement couramment utilisés dans l'industrie alimentaire qui nécessitent des feuilles de matériau polymère dites complexes, notamment le procédé dit FFS, issue des termes anglo-saxons Form, Fill & Seal.

Ceci est particulièrement vrai dans l'industrie agroalimentaire des laitages ou entremets pour laquelle il est nécessaire de conditionner les produits dans des contenants pour en assurer la commercialisation.

Ces produits agroalimentaires sont souvent très sensibles et requièrent des précautions particulières de protection.

De plus, au vu des quantités de produits et du nombre très important d'emballages nécessaires et compte tenu du prix de revient très bas, imposé, il faut recourir à des méthodes de forte productivité telles que le procédé FFS. Les contenants sont donc réalisés à partir de feuilles de matériau polymère qui sont thermoformées pour leur conférer la forme voulue, donc l'esthétique prévue et surtout la contenance recherchée.

Des rouleaux de matériau en feuille de matériau polymère thermoformable, dit pour la suite de la description "feuille polymère", sont disposés en tête de chaîne de conditionnement. La feuille polymère est déroulée à plat et les contenants sont thermoformés en continu par des matrices mobiles après chauffage. La surface de cette feuille est donc déformée en cours de défilement.

Le thermoformage laisse des zones planes, dans le plan de la feuille polymère initiale, non thermoformées, entre les alvéoles ainsi générées qui constituent les contenants.

Les feuilles ainsi thermoformées comportent donc de simples alvéoles, régulièrement réparties à la surface de la feuille et destinées à leur tour à être emplies avec du produit alimentaire à conditionner, avec le volume de produit prévu, au fur et à mesure du défilement.

Une fois que chaque alvéole a reçu sa dose de produit alimentaire, dans la zone de remplissage, il est nécessaire d'obturer chaque alvéole, là aussi au défilement sans interruption de la chaîne, dans la zone de scellage.

Un film de scellage est alors disposé sur la surface de la feuille polymère pour recouvrir la totalité de la surface de ladite feuille, au fur et à mesure, uniquement dans la zone postérieure au remplissage des alvéoles.

Ce film de scellage est complexe car il comporte généralement plusieurs couches associées ayant chacune un rôle particulier.

C'est ainsi que l'on peut trouver, par exemple, la superposition suivante, constituant un seul film monolithique de sellage à savoir :
- un film autorisant le soudage à chaud, destinée à être en contact avec la feuille polymère,
- un film barrière à l'oxygène,
- un film résistant mécaniquement avec une surface imprimable,
- un vernis résistant aux rayons ultra violets.

L'étape suivante consiste à sceller ce film sur toutes les zones communes de contact du film de scellage avec les zones planes de la feuille polymère, non thermoformées.

Le scellage peut être obtenu par tout moyen approprié comme un soudage thermique par tout moyen tel que chauffage infrarouge, induction ou ultrasons. Le but est d'obtenir le soudage sans provoquer un quelconque échauffement et/ou une quelconque transformation de la matière alimentaire contenue dans les alvéoles.

Le film de scellage obture donc pour le moins la périphérie de chaque alvéole, de façon étanche.

La feuille polymère est alors soumise à une découpe, par exemple au moyen d'un emporte pièce, qui assure une découpe franche des produits, individuellement ou par lots, et qui génère, si nécessaire, des amorces de rupture au sein de chaque lot afin de pouvoir séparer aisément les produits un à un lors de l'utilisation de chaque lot par un consommateur.

On comprend dès lors que, en fonction de chaque type de conditionnement, il subsiste des déchets de feuille polymère, liés aux amorces de fabrication, en début et en fin de fabrication ainsi qu'à chaque interruption avec redémarrage. De plus, en fonction du type de contenant même si ceux-ci sont optimisés, il subsiste des chutes, ne serait-ce que les chutes dues aux formes arrondies des angles, découpées dans des feuilles rectangulaires.

En effet, dans un lot de produits laitiers par exemple, les angles sont nécessairement arrondis de façon à ne pas blesser l'utilisateur, ce qui libère des pièces en étoile dans l'espace inter lots de la feuille.

De plus, les bordures des feuilles constituent également des déchets.

Le volume des déchets issus de ces fabrications est donc important, surtout quand les cadences de production se situent dans des domaines très productifs tels que l'agroalimentaire.

Ces déchets sont issus des feuilles polymère avec le film de scellage déjà soudé.

Le document JP 2 299 816 décrit un procédé de recyclage des déchets de feuilles complexes issues d'un procédé de thermoformage.

Le document DE 195 09 808 décrit un procédé de recyclage des feuilles complexes.

On connaît par exemple des contenants formés d'une feuille de matériau thermoformable en polystyrène avec un film alimentaire de scellage notamment commercialisé sous la marque Polymix.

Le but du procédé de la présente invention est de permettre un recyclage des déchets de matériau complexe ainsi générés de façon à séparer les matières et ceci sans détruire la structure, de façon à en permettre une réutilisation pour la même application, la qualité alimentaire ayant été conservée.

Le procédé est maintenant décrit en détail suivant un mode de réalisation particulier, non limitatif, en regard des dessins annexés sur lesquels les différentes figures montrent :
- figure 1 : une vue d'un lot fabriqué et des types de déchets générés, à base de matériau complexe,
- figure 2 : une vue d'un synoptique du procédé selon la présente invention,

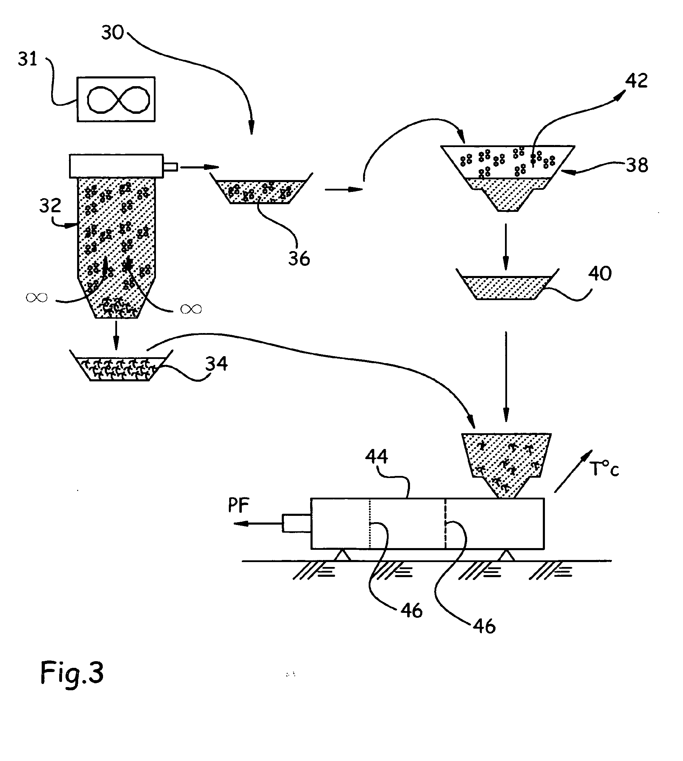

- figure 3 : une vue schématique du dispositif associé.

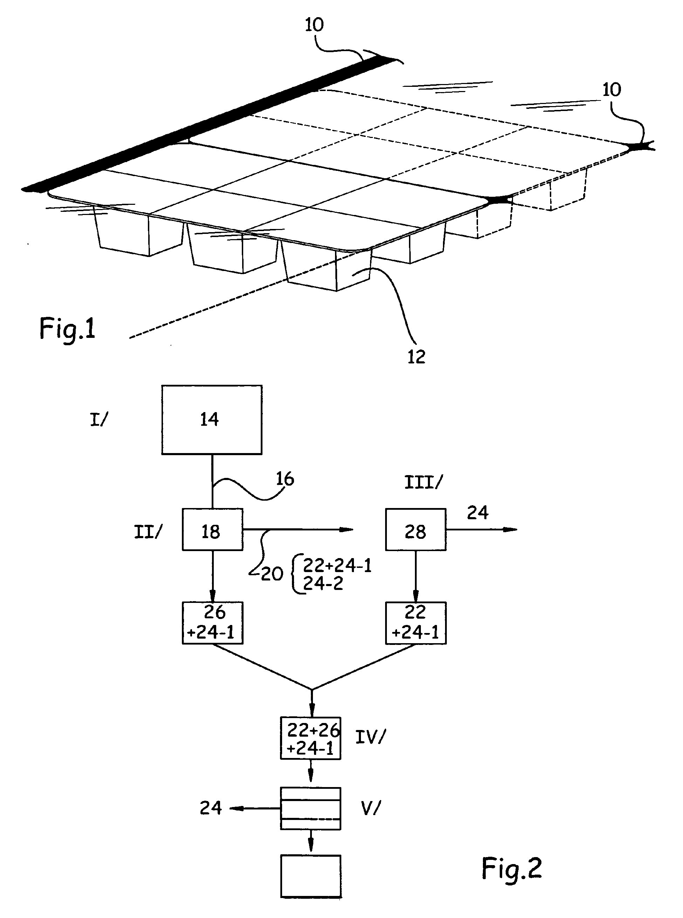

Le procédé, dont le synoptique est représenté sur la figure 2, consiste à récupérer les déchets 10 issus de la fabrication de contenants 12 par thermoformage, voir figure 1. Ces déchets sont constitués :
- des chutes de découpe des feuilles polymère thermoformées, remplies de produits alimentaires, scellées par un film,
- des bandes latérales des feuilles polymères thermoformées, et
- de portions de feuilles de plus grande surface, issues des démarrages, des fins de production de chaque série et des redémarrages éventuels en cours de production.

Sur la figure 1, on a représenté les déchets 10, c'est-à-dire notamment les "étoiles" et les bords latéraux, c'est-à-dire les parties de matériau complexe, découpées pour former les arrondis, notamment lors de la fabrication de pots de yaourt pour citer une application précise, non limitative et les bords latéraux des On appelle pour la suite de la description "feuille complexe" une feuille polymère destinée à former des contenants, généralement thermoformable, ayant reçu à sa surface un film de scellage soudé. On entend par "feuille polymère" le matériau thermoformable constituant le contenant et par "film de scellage" le film destiné à obturer les contenants par liaison intime avec la feuille polymère. Dans l'exemple retenu, le feuille polymère est constituée de polystyrène crystal et de polystyrène choc.

On comprend donc qu'il peut y avoir des surfaces de feuilles complexes de différentes dimensions.

La première étape I/ du procédé selon la présente invention est donc une étape 14 de broyage des déchets 10 de façon à homogénéiser les dimensions des particules à traiter.

Les dimensions des particules 16 obtenues après broyage sont de l'ordre de 1 à 5 millimètres pour donner un ordre d'idées.

La seconde étape II/ est une étape 18 de séparation qui consiste à provoquer un premier tri des particules, par exemple dans un cyclone à contrecourant d'air. Les particules 16 broyées tombent, sous l'effet de la gravité. Un contrecourant d'air ascendant combiné à la rotation cyclonique de cet air, entraîne les particules légères sur l'extérieur et vers le haut et laisse retomber au fond du cyclone les particules 22 lourdes, dans l'oeil du courant cyclonique.

Les particules 20 légères sont constituées de particules 22 de polystyrène crystal recouvert de particules 24-1 du film de scellage, liées au particules 22 et de particules 24-2 du film de scellage libres après l'action du broyage.

Les particules 26 lourdes sont constituées de polystyrène choc avec des particules 24-1 du film de scellage liées auxdites particules 26 lourdes.

La vitesse, le débit, la forme du cyclone sont adaptés pour assurer le tri de ce type de particules.

Lors d'une étape III/, les particules 20 légères sont collectées et sont soumises à une étape 28 de tri par tamisage qui sépare les particules 24 de très petites dimensions issues du film de scellage, générées par le broyage qui passe à travers le ou les tami(s) et les particules 22 de polystyrène crystal, de dimensions plus importantes, certaines de ces particules portant encore des fragments de film de scellage, qui constituent le refus.

Dans une étape IV/, les particules 26 plus lourdes, collectées en fond du cyclone de l'étape II/, sont associées aux particules collectées au refus du tamisage de l'étape III/, de façon à regrouper les particules de polystyrène crystal et de polystyrène choc.

Le polymère recombiné subit une fusion/granulation dans une étape V/.

Les particules sont ainsi fondues et le liquide visqueux obtenu est filtré à travers plusieurs niveaux de grilles.

Les particules 24 de très petites dimensions issues du film sont retenues car elles ne fondent pas tandis que le polymère, à l'état visqueux donc liquide, passe à travers les grilles. La température est fonction de la nature du polymère et dans le cas du mélange de polystyrène choc et crystal, la température est supérieure à 200 °C.

On utilise des grilles retenant les particules non fondues et pour cela on utilise des grilles à mailles de 90 à 110 *µ*m puis à mailles de 50 *µ*m, pour donner un ordre de grandeur.

Si le film de scellage comporte un film de matière cellulosique, pour la résistance mécanique et pour l' imprimabilité, celle-ci est carbonisée, les particules ayant soit une taille très réduite n'ayant aucun impact, soit une taille plus importante et alors, elles sont retenues par les grilles.

S'il existe des particules métalliques, par exemple en cas d'un film de scellage avec un film aluminisé, celles-ci sont retenues.

Le polymère fluide, exempt de particules de taille supérieure à 50 *µ*m est donc réutilisable pour fabriquer des granulés en sortie de filière de granuleuse quel que soit le type de granuleuse.

Ces granulés sont aptes à être transformés en feuilles de polymère thermoformable pour emballages, à travers une calandreuse par exemple.

Le polymère est donc recyclé.

On déduit aisément le double bénéfice tiré d'un tel procédé.

En effet, le produit n'est pas perdu et constitue donc une économie pour les achats et en plus, il évite d'avoir à payer pour éliminer ces déchets.

Le procédé de recyclage peut être mis en oeuvre en parallèle d'une société de conditionnement de produits alimentaires, en installant un dispositif adapté aux besoins.

Ce recyclage in situ est encore plus générateur d'économies en évitant le transfert des chutes qui prennent un fort volume alors que les granulés finaux sont transportables avec une meilleure compacité.

Le bénéfice ultime est en plus de limiter la consommation de produits fossiles et de limiter l'impact environnemental.

Les déchets ultimes du procédé selon la présente invention, comprenant essentiellement des particules du film de scellage, sont extrêmement limités en quantité et leur élimination est aisée.

Le dispositif 30 comprend donc des moyens 31 de broyage des moyens 32 de tri par gravité du type cyclone, comprenant des moyens 34 de collecte bas et des moyens 36 de collecte haut.

Le dispositif 30 comprend en outre des moyens 38 de tri par tamisage avec des moyens 40 de recueil du passant et des moyens 42 de collecte du refus.

En complément le dispositif 30 inclut dans la chaîne de traitement une granuleuse 44 avec four de fusion et des moyens 46 de filtrage de matériau polymère fondu.

Le polymère fondu PF est recueilli en sortie de filière et granulé soit par refroidissement et coupe au cutter tournant soit par projection dans un cyclone d'eau.

Les granulés ainsi produits sont mis en big bag par exemple.

## Revendications

1. Procédé de recyclage de déchets de feuilles complexes comprenant au moins une feuille polymère destinée à former des contenants, ayant reçu à sa surface un film de scellage soudé, **caractérisé en ce qu'**il comprend les étapes suivantes :
a. broyage des déchets,
b. séparation mécanique des déchets broyés visant à séparer les particules légères des particules lourdes comprenant majoritairement de la feuille polymère,
c. séparation mécanique par tamisage des particules légères issues de l'étape b) afin de séparer les particules de très petites dimensions issues du film de scellage seul et des particules de polymère de dimensions plus importantes qui forment le refus du tamisage,
d. regroupement des particules de polymère qui correspondent aux particules lourdes de l'étape b) et aux particules formant le refus du tamisage de l'étape c),
e. fusion des particules de polymère de l'étape d/ et filtration du polymère fondu.

2. Procédé de recyclage de déchets selon la revendication 1, **caractérisé en ce que** la séparation mécanique de l'étape b) est réalisée par cyclonage à contre-courant d'air.

3. Procédé de recyclage de déchets selon l'une quelconque des revendications précédentes, **caractérisé en ce que** l'étape de broyage produit des particules de dimensions comprises entre 1 et 5 millimètres.

4. Procédé de recyclage de déchets selon l'une quelconque des revendications précédentes, **caractérisé en ce que** la filtration du polymère fondu de l'étape e) est de 90 à 110µm.

5. Procédé de recyclage de déchets selon la revendication 4, **caractérisé en ce que** la filtration finale du polymère fondu de l'étape e) est de 50 µm.

6. Procédé de recyclage de déchets selon l'une quelconque des revendications précédentes, **caractérisé en ce qu'**il comprend une étape supplémentaire de granulation après fusion.

7. Procédé de recyclage de déchets selon l'une quelconque des revendications précédentes, **caractérisé en ce que**, dans le cas d'un polymère à base de polystyrène choc et de polystyrène cristal, la température de fusion est supérieure à 200°C.

8. Utilisation du procédé selon l'une quelconque des revendications précédentes, pour le recyclage des déchets de feuille de polystyrène thermoformable dans l'industrie alimentaire associée à un film de scellage soudé.

9. Dispositif de mise en oeuvre du procédé selon les revendications 1 à 7, **caractérisé en ce qu'**il comprend :
- des moyens (31) de broyage,
- des moyens (32) de tri par gravité du type cyclone, comprenant des moyens (34) de collecte bas et des moyens (36) de collecte haut,
- des moyens (38) de tri par tamisage des particules collectées au niveau des moyens (36) de collecte haut avec des moyens (40) de recueil du passant et des moyens (42) de collecte du refus,
- une granuleuse (44) avec four de fusion assurant la fusion des particules collectées au niveau des moyens (34) de collecte bas et des moyens (42) de collecte du refus et des moyens (46) de filtrage de matériau polymère fondu.

## Patentansprüche

1. Recycling-Verfahren für Abfälle von Folien-Verbundstoffe, die wenigstens eine zum Bilden von Behältern vorgesehene Polymerfolie aufweisen, die auf der Oberseite mit einer geschweißten Abdichtfolie versehen ist, **dadurch gekennzeichnet, dass** dieses die folgenden Verfahrensschritte aufweist:
a. Zerkleinern der Abfälle,
b. mechanische Trennung der zerkleinerten Abfälle, um die leichten Teilchen von den schweren Teilchen zu trennen, die sich überwiegend aus Polymerfolie zusammensetzen,
c. mechanische Trennung der sich im Verfahrensschritt b) ergebenden leichten Teilchen durch Sieben, um die Teilchen mit sehr kleiner Abmessung, die sich ausschließlich aus der Abdeckfolie ergeben, von den Polymerteilchen mit größeren Abmessungen, die das Restgut des Siebvorgangs bilden, zu trennen,
d. Zusammenführen der Polymerteilchen, die den schweren Teilchen des Verfahrensschritts b) entsprechen, und der Teilchen, die das Restgut des Siebvorgangs des Verfahrensschritts c) bilden,
e. Schmelzen der Polymerteilchen des Verfahrensschritts d) und Filtrieren des geschmolzenen Polymers.

2. Recycling-Verfahren für Abfälle nach Anspruch 1,
**dadurch gekennzeichnet, dass** die mechanische Trennung des Verfahrensschritts b) durch ein Fliehkraftabscheiden mit Gegenluftstrom bewerkstelligt wird.

3. Recycling-Verfahren für Abfälle nach einem der vorhergehenden Ansprüche, **dadurch gekennzeichnet, dass** der Zerkleinerungsvorgang Teilchen mit zwischen 1 und 5 Millimetern liegenden Abmessungen erzeugt.

4. Recycling-Verfahren für Abfälle nach einem der vorhergehenden Ansprüche, **dadurch gekennzeichnet, dass** das Filtrieren des geschmolzenen Polymers des Verfahrensschritts e) zwischen 90µm und 110µm liegt.

5. Recycling-Verfahren für Abfälle nach Anspruch 4,
**dadurch gekennzeichnet, dass** die abschließende Filtrierung des geschmolzenen Polymers des Verfahrensschritts e) bei 50 µm liegt.

6. Recycling-Verfahren für Abfälle nach einem der vorhergehenden Ansprüche, **dadurch gekennzeichnet, dass** es einen ergänzenden Verfahrensschritt der Granulierung nach dem Schmelzen aufweist.

7. Recycling-Verfahren für Abfälle nach einem der vorhergehenden Ansprüche, **dadurch gekennzeichnet, dass** im Falle eines Polymers auf der Grundlage von schlagfestem Polystyrol und klarem Polystyrol die Schmelztemperatur oberhalb von 200°C liegt.

8. Verwendung des Verfahrens nach einem der vorhergehenden Ansprüche für das Recycling von Abfällen aus thermisch formbarem Polystyrol in der Ernährungsindustrie in Verbindung mit einer geschweißten Abdeckfolie.

9. Vorrichtung zum Ausführen des Verfahrens gemäß den Ansprüchen 1 bis 7, **dadurch gekennzeichnet, dass** diese aufweist:
- Mittel (31) zum Zerkleinern,
- Mittel (32) zum Trennen durch Gravitation von der Art eines Fliehkraftabscheiders, die Mittel (34) für ein niedriges Auffangen und Mittel (36) für ein hohes Auffangen aufweisen,
- Mittel (38) zum Trennen durch Sieben der Teilchen, die im Bereich der Mittel (36) für das hohe Auffangen aufgenommen worden sind, mit Mitteln (40) zum Aufnehmen des hindurchgetretenen Guts und Mitteln (42) für die Aufnahme des Restguts,
- eine Granuliervorrichtung (44) mit Schmelzofen, der das Schmelzen der Teilchen gewährleistet, die im Bereich der Mittel (34) für das niedrige Auffangen und im Bereich der Mittel (42) für die Aufnahme des Restguts aufgenommen worden sind, und mit Mitteln (46) zum Filtrieren des geschmolzenen Polymermaterials.

## Claims

1. A method for recycling waste in complex sheet form comprising at least one polymer sheet intended to form containers, having received on its surface a welded sealing film, **characterised in that** it comprises the following steps:
a. grinding the waste,
b. mechanical separation of the ground waste aimed at separating the light particles from the heavy particles comprising mainly the polymer sheet,
c. mechanical separation by sieving of the light particles issuing from step b) in order to separate the particles of very small size issuing from the sealing film alone and polymer particles with larger sizes that did not pass through the sieving,
d. grouping of the polymer particles that correspond to the heavy particles of step b) and the particles that did not pass through sieving at step c),
e. fusion of the polymer particles from step d) and filtration of the molten polymer.

2. A waste recycling method according to claim 1, **characterised in that** the mechanical separation of step b) is performed by cycloning in the opposite direction to an air flow.

3. A waste recycling method according to any one of the preceding claims, **characterised in that** the grinding step produces particles with sizes of between 1 and 5 millimetres.

4. A waste recycling method according to any one of the preceding claims, **characterised in that** the filtration of the molten polymer at step e) is at 90 to 110 µm.

5. A waste recycling method according to claim 4, **characterised in that** the final filtration of the molten polymer from step e) is at 50 µm.

6. A waste recycling method according to any one of the preceding claims, **characterised in that** it comprises an additional step of granulation after fusion.

7. A waste recycling method according to any one of the preceding claims, **characterised in that**, in the case of a polymer based on impact polystyrene and crystal polystyrene, the melting point is above 200°C.

8. Use of the method according to any one of the preceding claims for recycling thermoformable polystyrene sheet waste in the food industry associated with a welded sealing film.

9. A device for implementing the method according to claims 1 to 7, **characterised in that** it comprises:
- grinding means (31),
- gravity sorting means (32) of the cyclone type, comprising low collection means (34) and high collection means (36),
- means (38) for sorting by sieving the collected particles at the high collection means (36) with means (40) for collecting the fines and means (42) for collecting the coarse particles,
- a granulator (44) with a melting oven melting the particles collected at the low collecting means (34) and the coarse collection means (42) and means (46) for filtering the molten polymer material.
